# EUROPEAN PATENT APPLICATION

(11) **EP 1 486 780 A1**
(43) Date of publication of application: **15.12.2004**
(21) Application number: 03705263.6
(22) Date of filing: 18.02.2003
(51) Int. Cl.: G01N 27/447, G01N 37/00

(54) **MICRO CHEMICAL CHIP**

(30) Priority: 19.02.2002 JP 2002042391
(71) Applicant: NGK INSULATORS, LTD., Nagoya-shi Aichi-ken (JP)
(72) Inventor: HIROTA, Toshikazu, c/o NGK INSULATORS, LTD., Nagoya-shi, Aichi 467-8530 (JP); YOSHIDA, Yasuko, c/o NGK INSULATORS, LTD., Nagoya-shi, Aichi 467-8530 (JP)
(74) Representative: Paget, Hugh Charles Edward
(86) International application number: PCT/JP2003/001692
(87) International publication number: WO 2003/071262

(57) **Abstract**

A microchemical chip (10A) comprises a plate-shaped substrate (12), with a channel (14) formed on a surface of the substrate (12) through which a fluid flows. A fluid storage section (16) for storing the fluid communicates with the channel (14) at a starting end of the channel (14). A fluid discharge section (18) communicates with the channel (14) at a terminal end of the channel (14). An extruding pump section (22) is formed integrally on the substrate (12), at a portion of the channel (14) in the vicinity of the fluid storage section (16).

## Description

### Technical Field:

The present invention relates to a microchemical chip, which has one or more channels for allowing fluids to flow therethrough on a substrate.

### Background Art:

Recently, research and development are advancing with respect to microchemical chips, on which chemical experiments are performed using a palm-sized chip (square or rectangle of several centimeters).

The microchemical chip includes a minute channel formed on a surface of a substrate, which is composed of, for example, glass or quartz. When a sample is supplied to the channel, so that the sample is moved toward a downstream side, biochemical experiments can be performed on the chip, including, for example, separation of sample components, reaction, purification, and genetic analysis.

Known measurement techniques that can be used on the microchemical chip include several techniques, such as electrophoresis and flow cytometry.

When the microchemical chip is used, an advantage is obtained in that results can be obtained in a shorter period of time with an extremely small amount of sample, as compared to other conventional experimental equipment.

When the sample is moved through the channel formed on the surface of the substrate of the conventional microchemical chip, the following procedure is adopted. That is, a large-sized pump is installed outside the substrate, and the sample is forcibly injected, or the sample is forcibly sucked by using the large-sized pump. Alternatively, the sample is moved, for example, in accordance with an electroosmotic flow generated in a sample solvent by applying a voltage between electrodes that are arranged at an inlet and an outlet of the channel.

When a large-sized pump is used, an analytical device, which includes the microchemical chip, also becomes large-sized, which results in an increase in costs. Further, in the case of the large-sized pump, the movement speed of the sample can be adjusted inevitably roughly, which results in deterioration of analytical accuracy, as well as deterioration in the efficiency of use of the expensive sample.

When electroosmotic flow is used, it is usually necessary that an extremely high electric field, of about several hundreds of volt/cm, be applied as a voltage between electrodes, which also results in large equipment size and high cost. Further, it is necessary to pay attention to the handling of such equipment, in view of safety. The entire sample solution flows toward a cathode utilizing Coulomb's force. Therefore, for example, when electrophoresis inspection is performed, this procedure is adaptable when the sample (solute), which serves as the inspection objective, is a negatively charged substance (DNA or protein). However, in the case of a positively charged substance, or a substance having no electric charge (for example, cells), it is difficult to cause a difference in mobility of the inspection objective. As a result, a problem arises in that resolution of the inspection is deteriorated.

The movement speed of the sample solution is generally about several hundreds to several thousands of picoliters per second, in the case of a channel having a cross-sectional area of several hundreds to several thousands square microns. In this situation, high speed inspection cannot be satisfactorily achieved.

When the sample is supplied from the outside into the channel using a conventional microchemical chip, the sample is dispensed into an injection port, having an opening of several millimeters to several centimeters φ, by using a commercially available micropipette. However, realizing a decrease in amount of sample is limited to about several hundreds to several thousands of nanoliters, for each time the amount of sample is dispensed. It has also been expected to realize an injection method, in which the amount of an injected sample could be even more minute.

The present invention has been made taking the foregoing problems into consideration, an object of which is to provide a microchemical chip which makes it possible to realize a small-sized chip, improve analytical accuracy with respect to a sample and highly accurately analyze the sample irrelevant to any electric charge, which makes it possible to greatly shorten the inspection time, and which makes it possible to realize multiple channels.

Another object of the present invention is to provide a microchemical chip, which makes it possible to supply a more minute amount of sample from the outside, further improve efficiency of use of the sample and improve analytical accuracy, and to realize high speed analysis, in addition to the objects described above.

### DISCLOSURE OF THE INVENTION

The present invention lies in providing a microchemical chip, comprising one or more channels for allowing a fluid to flow therethrough on a substrate, wherein a pump section is provided on an upstream side and/or a downstream side of the channel, and wherein the pump section is formed integrally on the substrate.

Because the pump section is formed integrally on the substrate, the pump section can be used for providing charging or injection of fluid into the channel, or to perform discharge or suction of the fluid from the channel. It is unnecessary to install a large-sized pump outside of the substrate. As a result, it is possible to achieve a small size for the chip.

The amount of movement of the fluid can be adjusted inevitably roughly when using a large-sized pump. However, in the case of the pump section, which is integrally formed on the substrate, it is possible to decrease the adjustable unit flow rate (resolution) as compared with the amount of fluid flowing through the channel. Therefore, it is possible to more accurately adjust the amount of movement of the fluid. The movement speed of the fluid can be freely varied using a driving signal supplied to the pump. It is possible to realize a movement speed of from several picoliters per second to several microliters per second. Further, it is unnecessary to apply an extremely high electric field, of several hundred volts/cm, in order to move the fluid. It is possible to avoid a large size and high cost for the device. Further, it is easy to handle the device in terms of safety.

Further, since the fluid can be moved using the pump section, it is a matter of course that a fluid having no electric charge can also be moved. Therefore, no inconvenience arises, which would be otherwise caused if the inspection accuracy were affected by the state of electric charge and the component of the sample (solute) during electrophoresis inspection.

In the microchemical chip constructed as described above, it is preferable that the microchemical chip further comprises a valve section disposed on at least an upstream side of the channel, wherein the valve section is formed integrally on the substrate. Accordingly, when a valuable or expensive fluid is handled, the amount of fluid supplied to the channel can be arbitrarily adjusted using the valve section. Thus, it is possible to improve efficiency of use of the sample and to reduce costs.

In the microchemical chip constructed as described above, it is preferable that the microchemical chip further comprises electrodes for performing electrophoresis on the fluid, at an upstream side and/or a downstream side of the channel. This arrangementiis preferably adopted in order to perform electrophoresis inspection, wherein inspection accuracy is not affected by the state of electric charge and the component of the sample (solute). For example, in the case of DNA or a protein in which the sample (solute) serving as the inspection objective is negatively charged, it is also possible to finely control the amount of movement of the fluid with respect to the sample, by reversing the direction of electrophoresis so as to be opposite to the direction of movement effected by the pump section. Thus, it is possible to improve inspection accuracy. That is, when an electrode, which is disposed in the direction of movement of the fluid controlled by the pump section, is made negative, the force acts such that the sample itself is attracted in a direction opposite to the flow (i.e., toward the positive electrode). Thus, the ability of separation is improved.

When the fluid itself has a polarity, movement is caused by electroosmotic flow, in addition to movement of the fluid effected by the pump, by adjusting the intensity of the electric field applied between the electrodes. It is possible to complete the analysis, and movement of fluid, more effectively at high speeds.

When the sample (solute) serving as the inspection objective is positively charged, a force acts so that the sample itself is attracted in a direction opposite to the flow (i.e., toward the negative electrode) when an electrode, which is disposed in a direction of movement of the fluid effected by the pump section, is made positive. Thus, it is possible to ensure sufficient sample separation.

In the microchemical chip constructed as described above, it is also preferable that one or more sample channels are provided for allowing one or more samples, serving as inspection objectives, to flow therethrough. Accordingly, multiple channels can be easily realized.

In the microchemical chip constructed as described above, it is also preferable that samples and transport fluids, which correspond to one or more sample channels, flow through one or more sample channels respectively. Accordingly, valuable or expensive samples can be conserved. Experiments can be efficiently performed, and thus the arrangement is advantageous in view of cost. Further, the sample supplied to a given channel can be mixed with a sample supplied from another channel, by adjusting the supply timing of the samples.

In the microchemical chip constructed as described above, it is also preferable that a sample supply section be provided for one or more sample channels, in order to supply the samples corresponding thereto respectively. Accordingly, it is possible to arbitrarily and accurately set the supply amount and supply timing of minute sample amounts (i.e., at the picoliter level) to the sample channels. This makes it possible to finely control, for example, biochemical reactions in the channels. This further results in an improvement in accuracy of the experiment, inspection, and analysis, decrease in inspection time, and decrease in cost.

In the microchemical chip constructed as described above, it is also preferable that the channels include a merging channel, in which one or more samples are merged with each other from one or more sample channels. It is easy to perform, for example, reaction and analysis as a result of merging a large number of samples.

In the microchemical chip constructed as described above, it is also preferable that the channels include one or more sample channels for allowing one or more samples, serving as inspection objectives, to flow therethrough respectively, and a transport channel for allowing a transport fluid for transporting the samples to flow therethrough.

In this arrangement, it is also preferable that the channels include a merging channel, in which one or more samples from one or more sample channels are merged with the transport fluid from the transport channel, or a merging channel in which a fluid obtained by mixing one or more samples from one or more sample channels is merged with the transport fluid from the transport channel. When the sample channels and the transport channel are formed separately, it is possible to select, for example, the material and the shape, which are optimum for the physical properties of the respective fluids. Such movement and merging can be performed while saving valuable or expensive samples more effectively. It is possible to perform experiments more efficiently. Further, the arrangement is advantageous in view of cost.

In the microchemical chip constructed as described above, it is also preferable that each of the one or more sample channels has a valve section therein, disposed at an upstream stage of the merging channel. Accordingly, it is possible to arbitrarily and reliably adjust the movement of valuable or expensive fluids into the merging portion by using the valve section. Alternatively, it is also preferable that the microchemical chip further comprises a vibration-generating section, disposed in an area at which merging occurs. It is possible to enhance merging efficiency of one or more samples within the merging area, and it is possible to improve, for example, mixing speed, biochemical reaction speed, and inspection speed, while more reliably performing mixing to thereby enhance the biochemical reaction. The location where the vibration-generating section is formed may be any one of an upper surface, a flat surface, a side surface, or the entire circumferential surface, provided that the location exists on at least a part of a wall surface of the channel of the merging portion.

Further, one or more sample channels may intersect each other. Alternatively, one or more sample channels and the transport channel may intersect each other, or a merging channel of one or more sample channels and the transport channel may intersect each other. By doing so, a pump is provided for every channel. It is possible to control drive timing of the pump, along with the suction and discharge force of the pump, separately for each channel, and/or it is possible to combine the above. It is possible to mix the sample at the intersecting portion and/or it is possible to effect movement from one channel to another channel. Further, in this arrangement, it is preferable that each of the sample channels has a valve section disposed upstream of the intersecting portion. Accordingly, it is possible to arbitrarily and reliably adjust movement of valuable or expensive fluids into the intersecting portion using the valve section. It is possible to more reliably move the sample from one channel to the other channel. Further, it is also preferable that a vibration-generating section be provided at the intersecting portion. With this arrangement, it is possible to enhance mixing efficiency of one or more samples at the intersecting portion. It is further possible to enhance the biochemical reaction and improve inspection speed. The location where the vibration-generating section is formed may be any one of an upper surface, a flat surface, a side surface, or the entire circumferential surface, provided that the location exists on at least a part of a wall;surface of the channel at the intersecting portion.

In the microchemical chip constructed as described above, it is also preferable that the valve section has a heater, which applies heat to a part of the channel. As a result, a change in flow passage resistance, caused by changing the viscosity of the fluid, is effected by heat. When electric power is applied to the heater, so that a portion of the channel in the vicinity of the heater is heated, then the fluid viscosity is generally lowered, and the fluid flows through the channel. On the other hand, when application of electrics power to the heater is stopped, so that the valve section is cooled, the viscosity of the fluid is raised. As a result, flow passage resistance is raised, and the flow of fluid is stopped. In other words, fluid flow can be controlled,by applying or stopping the supply of electric power to the heater, thereby functioning as a valve section.

It is also preferable that the valve section has a vibration-generating section, which applies vibration to a part of the channel. Thus, a change in flow passage resistance is effected by such vibration. When vibration is applied to a part of the channel, flow passage resistance is increased, and therefore, the flow of fluid is stopped. The location where the vibration-generating section is formed may be any one of an upper surface, a flat surface, a side surface, or the entire circumferential surface, provided that the location exists on at least a part of a wall surface of the channel.

It is also preferable that the valve section includes a cavity, which makes communication with the channel, and an actuator section that varies the volume of the cavity. With such an arrangement, as described above, operation timing may be synchronized between the actuator of the valve section and the pump section. That is, the actuator is operated at a predetermined timing, so that a force is exerted to cause the fluid in the cavity to flow in an opposite direction (i.e., a direction opposite to the direction of flow of the fluid effected by the pump section), whereby the volume of the cavity is decreased by operation of the actuator section when the fluid in the channel is moved by the pump section. As a result, it is possible to stop the flow of fluid by the aid of the valve section.

When the valve section is constructed by a heater, a vibration-generating section, or an actuator section, as described above, reliable operation can be realized with a more simple and inexpensive structure, as compared with the conventional mechanical valve. On the other hand, such a construction is also excellent in durability.

Further, it is preferable that each of the pump section and the sample supply section comprises a nozzle, a cavity that makes communication with a channel, and a pump actuator section that varies the volume of the cavity. With this arrangement, when the volume of the cavity is decreased by operation of the actuator section, fluid in the cavity is forced to flow toward a downstream side. In addition, when the volume of the cavity is expanded or returned to its original volume, fluid on an upstream side is attracted into the cavity. By successively repeating the above operations, fluid on an upstream side of the cavity is caused to flow successively toward a downstream side thereof.

It is also preferable that a valve section be provided between the channel and the cavity. With such an arrangement, the valve section also includes a valve plug, which is arranged at a communicating section where the channel and the cavity communicate with each other, and a valve actuator section that operates the valve plug to selectively open and close the communicating section. Accordingly, the pump can move the fluid more conveniently and efficiently. In particular, using this arrangement, it is easy to fill an empty channel with fluid.

### BRIEF DESCRIPTION OF THE DRAWINGS

FIG. 1 shows a perspective view illustrating a microchemical chip according to a first embodiment;
FIG. 2 shows a sectional view illustrating a first pump section;
FIG. 3 shows a sectional view illustrating a second pump section;
FIG. 4 shows a perspective view illustrating a microchemical chip according to a second embodiment;
FIG. 5 shows a sectional view illustrating a third pump section;
FIG. 6 shows a sectional view illustrating a fourth pump section;
FIG. 7 shows a perspective view illustrating a microchemical chip according to a third embodiment;
FIG. 8 shows a sectional view illustrating a structure of a main supply section of a sample supply section;
FIG. 9 shows a perspective view illustrating a microchemical chip according to a fourth embodiment;
FIG. 10 shows a perspective view illustrating a modified embodiment of the microchemical chip according to the fourth embodiment;
FIG. 11 shows a perspective view illustrating a microchemical chip according to a fifth embodiment;
FIG. 12 shows a sectional view illustrating a structure of a vibration-generating section;
FIG. 13 shows a perspective view illustrating a microchemical chip according to a sixth embodiment;
FIG. 14 shows a sectional view illustrating a first check valve;
FIG. 15 shows a sectional view illustrating a second check valve;
FIG. 16 shows a perspective view illustrating a microchemical chip according to a seventh embodiment;
FIG. 17 shows a perspective view illustrating a microchemical chip according to an eighth embodiment;
FIG. 18 shows a perspective view illustrating a microchemical chip according to a ninth embodiment;
FIG. 19 shows a sectional view illustrating a first valve section;
FIG. 20 shows a sectional view illustrating a second valve section; and
FIG. 21 shows a sectional view illustrating a third valve section.

### BEST MODE FOR CARRYING OUT THE INVENTION

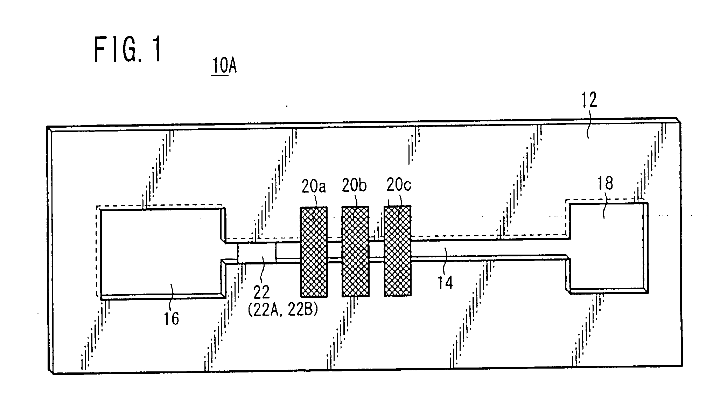

An explanation will be made below with reference to FIGS. 1 to 21, which illustrate various embodiments of a microchemical chip according to the present invention.

As shown in FIG. 1, a microchemical chip 10A according to a first embodiment comprises a plate-shaped substrate 12, including one channel 14 which is formed on a surface of the substrate 12, wherein an upper surface thereof is closed with a transparent glass plate, and wherein a fluid is allowed to flow through the channel 14. A fluid storage section 16, in which fluid is stored, is formed at a starting end of the channel 14 and communicates with the channel 14. A fluid discharge section 18, which also communicates with the channel 14, is formed at the terminal end of the channel 14.

The fluid may include, for example, a single solution in which a sample (solute), serving as an inspection objective, is dissolved or dispersed, or a combination made up of the sample solution as the inspection objective and a transport fluid. When a transport fluid is used in addition to the sample, it is possible to conserve expensive samples.

Materials usable as the sample may include, for example, nucleic acids, proteins, saccharides, cells, and conjugated thereof. The nucleic acids may include, for example, DNA and/or fragments thereof as well as amplified products thereof, cDNA and/or fragments thereof as well as amplified products thereof, RNA or antisense RNA and/or fragments thereof as well as amplified products thereof, synthetic DNA as well as amplified products thereof, and synthetic RNA as well as amplified products thereof. The proteins may include, for example, antigens, antibodies, lectin, adhesin, receptors for bioactive substance substances, and peptides.

Devices installed in the channel 14, which are usable for performing chemical analysis such as chromatography, include, for example, heat-generating sections, heating sections, cooling sections, pH-adjusting sections, laser-irradiating sections, radiation-emitting sections, and inspecting sections. FIG. 1 is illustrative of a case in which three types of heat-generating sections 20a to 20c are installed by way of example.

Materials for constructing the substrate 12 may include, for example, glass, plastic, silicon (quartz), ceramics, and glass ceramics. Among the materials described above, it is preferable to use a glass material considering, for example, chemical durability and transparency, as well as providing electric insulation in the case that electrophoresis is used. For forming the channel 14 on the surface of the substrate 12, it is possible to use an etching method such as, for example, photolithography.

The glass material is selected taking into account its material properties which facilitate the formation of the channel 14 therein, and while also considering factors which affect the fluid, including, for example, durability against weak acids and weak alkalis, wettability, water repellence, surface tension, elution of glass components, polarity of the glass surface, and the surface group.

Various glasses are usable as the glass material, including, for example, borosilicate glasses such as white board or white sheet (BK 7), as well as glasses based on La, Zr, and Ti.

As shown in FIG. 1, in the first embodiment, an extruding pump section 22 is formed integrally on the substrate 12, at a portion of the channel 14 on an upstream side thereof, in the vicinity of a fluid storage section 16.

Features of the extruding pump section 22 shall now be explained. For example, first and second pump sections 22A, 22B can be used as the pump section 22. An explanation will be made below concerning the first and second pump sections 22A, 22B.

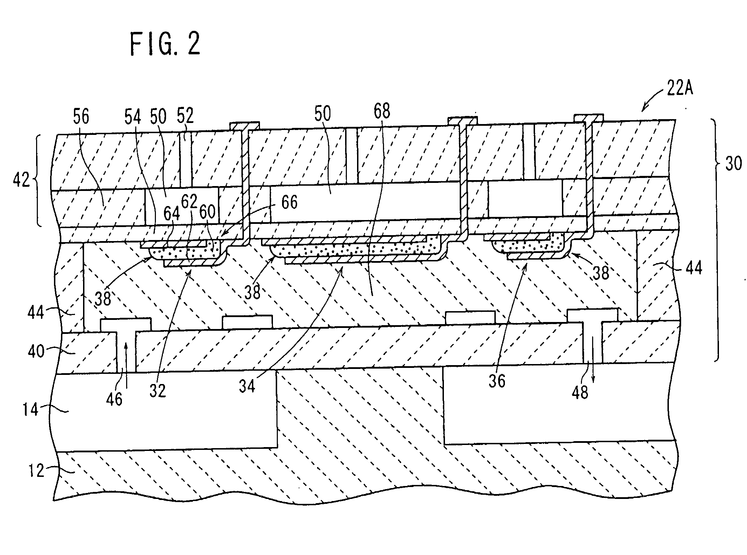

Details of the first pump section 22A are described in Japanese Laid-Open Patent Publication No. 2000-314381, the content of which is incorporated herein by reference. However, a brief explanation will now be made. As shown in FIG. 2, the first pump section 22A comprises a casing 30 made of, for example, a ceramic and to which the fluid is supplied, an input valve 32, a pump 34, and an output valve 36, which confront one surface of the casing 30. Each of the input valve 32, the pump 34, and the output valve 36 comprises an actuator section 38.

The casing 30 is constructed by stacking a plurality of zirconia ceramic green sheets, and sintering them in an integrated manner. The casing 30 includes a partition plate 40, which is provided in contact with a surface of the substrate 12, a second substrate 42, which opposes the partition plate 40, and a support member 44, which is provided between the partition plate 40 and the second substrate 42.

The first pump section 22A controls fluid flow by selectively forming a flow passage on a back surface of the casing 30 by selectively displacing each of the input valve 32, the pump 34, and the output valve 36 in directions to approach and separate from each other.

An inlet hole 46 for supplying fluid and a discharge hole 48 for discharging fluid are formed through the partition plate 40. The input valve 32, the pump 34, and the output valve 36 are arranged laterally between the inlet hole 46 and the discharge hole 48.

Hollow spaces 50, forming vibrating sections, are provided respectively in the second substrate 42, at positions corresponding to the input valve 32, the pump 34, and the output valve 36. Each of the hollow spaces 50 communicates to the exterior via a small diameter through-hole 52, which is provided at an end surface of the second substrate 42.

Portions of the second substrate 42 where the hollow spaces 50 are formed are thin-walled, and the remaining portion of the second substrate 42 is thick-walled. The thin-walled portions are constructed so that vibration is easily received when an external stress is applied, for functioning as a vibrating section 54. The remaining portion, other than the hollow spaces 50, functions as a fixed section 56 for supporting the vibrating section 54.

A plurality of unillustrated support pillars intervene between the partition plate 40 and the second substrate 42 in the vicinity of the actuator section 38, and thus rigidity is maintained. In this embodiment, rigidity is further maintained by the support member 44 of the casing 30.

Each of the actuator sections 38 comprises a vibrating section 54 and a fixed section 56, as well as an operating section 66. The operating section 66 includes a shape-retaining layer 60, such as a piezoelectric/electrostrictive layer or an anti-ferroelectric layer formed on the vibrating section 54, and an upper electrode 62 and a lower electrode 64, which are formed respectively on upper and lower surfaces of the shape-retaining layer 60.

The first pump section 22A includes a displacement-transmitting section 68. The displacement-transmitting section 68 is formed over each of the actuator sections 38, and transmits displacement from each of the actuator sections 38 in a direction toward a back surface of the casing 30.

For feeding fluid from an upstream side of the first pump section 22A to a downstream side of the first pump section 22A, the actuator section 38 of the input valve 32 is driven so that an end surface portion of the displacement-transmitting section 68, corresponding to the input valve 32, separates from the partition plate 40. Subsequently, the actuator section 38 of the pump 34 is driven so that an end surface portion of the displacement-transmitting section 68, corresponding to the pump 34, separates from the partition plate 40. Accordingly, fluid on the upstream side flows toward the pump 34 by the aid of the input valve 32.

Next, the actuator section 38 of the input valve 32 is driven so that an end surface portion of the displacement-transmitting section 68, corresponding to the input valve 32, makes contact with the partition plate 40. Subsequently, the actuator section 38 of the output valve 36 is driven so that an end surface portion of the displacement-transmitting section 68, corresponding to the output valve 36, separates from the partition plate 40. Further, the actuator section 38 of the pump 34 is driven so that an end surface portion of the displacement-transmitting section 68, corresponding to the pump 34, makes contact with the partition plate 40. Accordingly, fluid flows toward the output valve 36.

Thereafter, the actuator section 38 of the output valve 36 is driven so that an end surface portion of the displacement-transmitting section 68, corresponding to the output valve 36, makes contact with the partition plate 40. Accordingly, fluid flows inwardly, into a downstream side of the channel 14, via the discharge hole 48.

The operations described above are successively repeated, and thus fluid, which exists on an upstream side of the first pump section 22A (in this case, in the fluid storage section 16), successively flows toward a downstream side of the first pump section 22A, i.e., toward a downstream side of the channel 14.

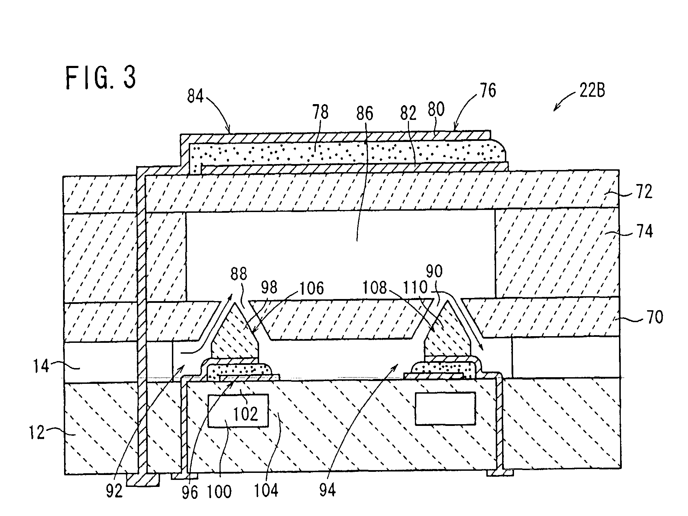

As shown in FIG. 3, the second pump section 22B comprises a partition plate 70 in contact with a surface of the substrate 12, a vibration plate 72 opposing the partition plate 70, and a support member 74 disposed between the partition plate 70 and the vibration plate 72. The partition plate 70, the vibration plate 72 and the support member 74 are constructed by stacking a plurality of zirconia ceramic green sheets, and sintering the sheets in an integrated manner.

An operating section 76 is formed on an upper surface of the vibration plate 72. The operating section 76 comprises a shape-retaining layer 78, such as a piezoelectric/electrostrictive layer or an anti-ferroelectric layer, and an upper electrode 80 and a lower electrode 82 formed respectively on upper and lower surfaces of the shape-retaining layer 78, in the same manner as in the first pump section 22A described above. The vibration plate 72 and the operating section 76 together make up an actuator section 84.

A cavity 86, into which fluid is introduced, is formed under the vibration plate, at a location corresponding to the operating section 76. In other words, the cavity 86 is defined by the partition plate 70, the vibration plate 72, and the support member 74, and the cavity 86 communicates with an inlet hole 88 and a discharge hole 90, which are formed through the partition plate 70.

On the other hand, an input valve 92 and an output valve 94 are provided in the channel 14 of the substrate 12, at portions corresponding to the inlet hole 88 and the discharge hole 90.

The input valve 92 comprises an actuator section 96 and a conical displacement-transmitting section 98 provided on the actuator section 96. The actuator section 96 further comprises a hollow space 100 formed in the substrate 12, wherein the hollow space 100 makes up a vibrating section 102 and a fixed section 104, and wherein an operating section 106 is formed on the vibrating section 102. Similarly, the output valve 94 also comprises an actuator section 108 and a conical displacement-transmitting section 110 provided on the actuator section 108.

The displacement-transmitting section 98 of the input valve 92 opens and closes the inlet hole 88 by displacing the actuator section 96 of the input valve 92 in a vertical direction. Similarly, the displacement-transmitting section 110 of the output valve 94 opens and closes the discharge hole 90 by displacing the actuator section 108 of the output valve 94 in a vertical direction.

Therefore, fluid disposed on an upstream side of the second pump section 22B is introduced into the cavity 86 by the aid of the input valve 92 and the inlet hole 88. Further, fluid contained in the cavity 86 flows downstream by the aid of the discharge hole 90 and the output valve 94, as a result of changing the volume of the cavity 86 by driving of the actuator section 84.

In the microchemical chip 10A, the pump section 22 is formed integrally on the substrate 12 on an upstream side of the channel 14. Therefore, it is possible to cause movement and charging of fluid into the channel 14, while the microchemical chip 10A has the same size as that of a conventional microchemical chip. Considering fluid viscosity, movement can be performed with fluids having a high viscosity of up to about one hundred thousand centipoises. It is also possible to realize movement speeds ranging from 10 picoliters per second to a maximum of 10 microliters per second.

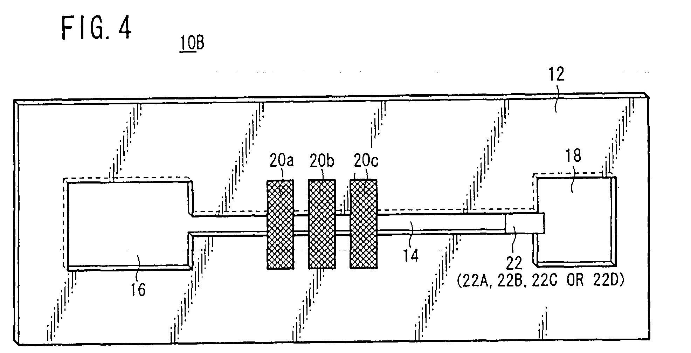

Next, as shown in FIG. 4, a microchemical chip 10B according to a second embodiment is constructed in approximately the same manner as the microchemical chip 10A described above. However, the microchemical chip 10B differs in that a suction pump section 22 is formed integrally on the substrate 12 on a downstream side of the channel 14, i.e., in the vicinity of the fluid discharge section 18 of the channel 14.

As shall be described below, the pump section 22 may also include third and fourth pump sections 22C, 22D in addition to the aforementioned first and second pump sections 22A, 22B.

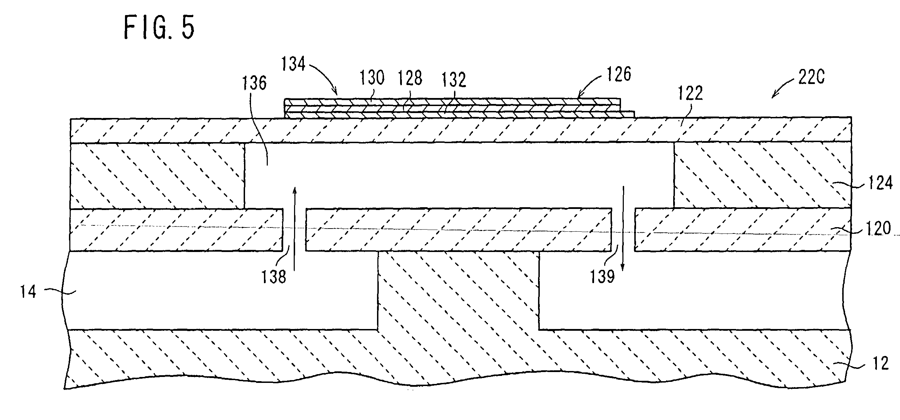

Details of the third pump section 22C are described, for example, in Japanese Laid-Open Patent Publication No. 2001-124789, the content of which is incorporated herein by reference. However, a brief description will now be made below. As shown in FIG. 5, the third pump section 22C comprises a partition plate 120 provided in contact with a surface of the substrate 12, a vibration plate 122 opposed to the partition plate 120, and a support member 124 disposed between the partition plate 120 and the vibration plate 122. The partition plate 120, the vibration plate 122 and the support member 124 may be constructed by stacking a plurality of zirconia ceramic green sheets, and sintering the sheets in an integrated manner.

An operating section 126 is formed on an upper surface of the vibration plate 122. The operating section 126 comprises a shape-retaining layer 128, such as a piezoelectric/electrostrictive layer or an anti-ferroelectric layer, and an upper electrode 130 and a lower electrode 132 formed on upper and lower surfaces of the shape-retaining layer 128, in the same manner as the first pump section 22A described above. The vibration plate 122 and the operating section 126 together make up an actuator section 134.

A cavity 136, into which a fluid is introduced, is formed under the vibration plate 122 at a location corresponding to the operating section 126. In other words, the cavity 136 is defined by the partition plate 120, the vibration plate 122 and the support member 124, and the cavity 136 communicates with an inlet hole 138 and a discharge hole 139 that are formed through the partition plate 120.

For feeding fluid introduced on an upstream side of the third pump section 22C to a downstream side of the third pump section 22C, the actuator section 134 is driven to decrease the volume of the cavity 136. Accordingly, fluid contained in the cavity 136 is forced to flow downstream. When the actuator section 134 is driven to expand the volume of the cavity 136, or to return the cavity 136 to its original volume, fluid on the upstream side is introduced into the cavity 136. The operations described above are successively repeated, and thus fluid on the upstream side successively flows downstream.

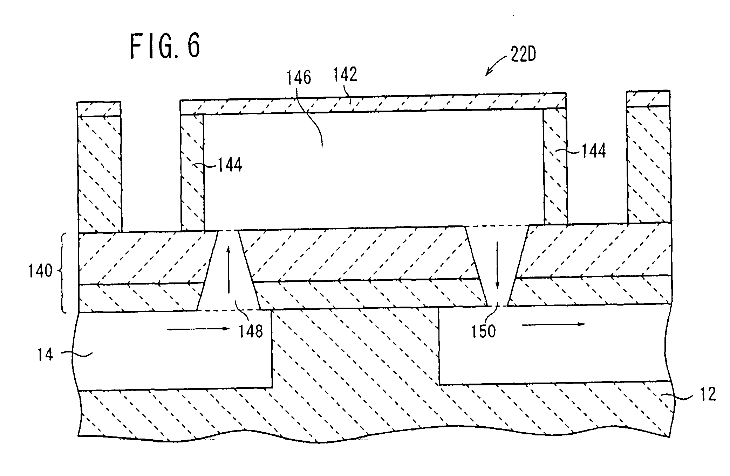

On the other hand, as shown in FIG. 6, the fourth pump section 22D comprises a partition plate 140 provided in contact with a surface of the substrate 12, an upper plate 142 opposing the partition plate 140, and side walls 144 disposed between the partition plate 140 and the upper plate 142.

Side walls 144 are composed of a piezoelectric/electrostrictive material or an anti-ferroelectric material. Although not shown, electrode films are formed on the side walls 144. When voltage is supplied to the electrode films and an electric field is applied to the side walls 144, the side walls 144 are expanded/contracted in a vertical direction, depending on the intensity of the electric field.

A volume surrounded by the partition plate 140, the side wall 144 and the upper plate 142 forms a cavity 146 for introducing a fluid thereinto. The cavity 146 communicates with an inlet hole 148 and a discharge hole 150 provided in the partition plate 140.

The inlet hole 148 has a diameter that is progressively smaller toward the cavity 146, wherein the opening diameter facing the channel 14 is larger than the opening diameter facing the cavity 146. Similarly, the discharge hole 150 has a diameter that is progressively larger toward the cavity 146, wherein the opening diameter facing the channel 14 is smaller than the opening diameter facing the cavity 146. In other words, the inlet hole 148 is structured such that fluid disposed on an upstream side enters easily into the cavity 146 via the inlet hole 148, whereas fluid contained in the cavity 146 is not easily discharged via the inlet hole 148. The discharge hole 150 is structured such that fluid contained in the cavity 146 is easily discharged downstream via the discharge hole 150, whereas fluid on the downstream side is prevented from entering the cavity 146 via the discharge hole 150.

For feeding fluid on an upstream side of the fourth pump section 22D downstream of the fourth pump section 22D, a positive electric field is applied to the side walls 144 in order to shrink the side walls 144, whereby the volume of the cavity 146 decreases. Accordingly, fluid contained in the cavity 146 is forced to flow downstream. When a negative electric field is applied to the side walls 144 in order to elongate the side walls 144, the volume of the cavity 146 expands or is returned to its original volume. Accordingly, fluid on the upstream side is attracted into the cavity 146. By successively repeating the above operations, fluid on the upstream side flows successively downstream.

The microchemical chip 10B is small in size, in the same manner as the microchemical chip 10A described above. Further, the microchemical chip 10B can be constructed conveniently and inexpensively, because the pump section 22 does not require a valve structure. Durability of the microchemical chip 10B is also improved. As has been noted, the pump section 22 of the microchemical chip 10B has no valve structure, and therefore, fluid cannot be extruded. The microchemical chip 10B operates as a suction pump, wherein the downstream side thereof resides at atmosphere and the upstream side is filled with fluid, as illustrated in the above embodiment. Fluid can be moved having a viscosity up to about 1,000 centipoises. Movement speeds, ranging from 1 picoliter per second to a maximum of 10 microliters per second, have been successfully realized. When experiments and analyses were performed using microchemical chips 10A and 10B, improvements in analytical accuracy and biochemical analysis were achieved using fluids having no electric charge.

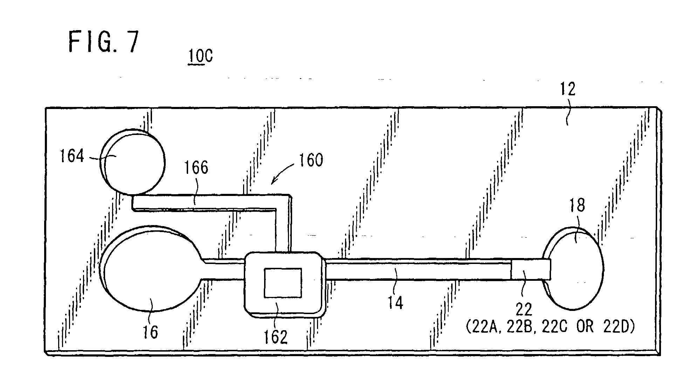

Next, a microchemical chip 10C according to a third embodiment will be explained with reference to FIG. 7.

The microchemical chip 10C is constructed in approximately the same manner as the microchemical chip 10B described above. However, the microchemical chip 10C differs in that a sample supply section 160 is provided in order to supply the sample to the channel 14.

The sample supply section 160 comprises a main supply section 162 formed within an opening making up a part of the channel 14 and disposed on an upper surface thereof, a sample storage section 164 formed on the surface of the substrate 12, and a sample channel 166 for introducing a sample from the sample storage section 164 to the main supply section 162.

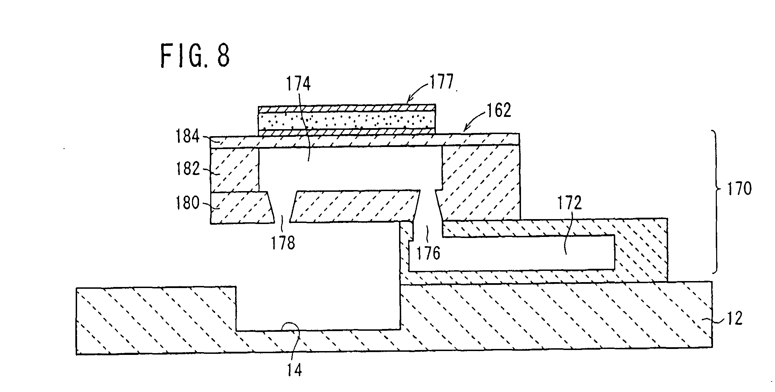

As shown in FIG. 8, the main supply section 162 further comprises a ceramic casing 170 formed on the surface of the substrate 12. The casing 170 is constructed by stacking a plurality of ceramic green sheets, and sintering the sheets in an integrated manner. Inside the casing 170 are first and second cavities 172, 174, which temporarily store the sample supplied from the sample channel 166, a communication hole 176 communicating between the first and second cavities 172, 174, and a sample discharge hole 178 which is directed toward an opening of the channel 14.

The main supply section 162 further includes an actuator section 177, which vibrates the casing 170 and/or which changes the volume of the second cavity 174. The second cavity 174 is defined by a lower plate 180 in which the sample discharge hole 178 and the communication hole 176 are formed, an upper plate 184 (vibration plate) positioned over the second cavity 174, and a side plate 182 arranged between the lower plate 180 and the upper plate 184. The actuator section 177 is formed on a surface of the upper plate 184.

In the main supply section 162 constructed as described above, when the volume of the second cavity 174 decreases by driving the actuator section 177, the sample contained in the second cavity 174 is discharged at a predetermined speed from the sample discharge hole 178, and the sample is supplied to the channel 14. When the actuator section 177 is driven to expand the volume of the second cavity 174 or to return the second cavity 174 to its original volume, the sample contained in the first cavity 172 is introduced into the second cavity 174 via the communication hole 176, and further, the sample contained in the sample storage section 164 is introduced into the first cavity 172 via the sample channel 166. When the operations described above are successively repeated, the sample contained in the sample supply section 160 is successively supplied to the channel 14.

In this arrangement, the size of the main supply section 162 is selected depending on, for example, the overall size of the microchemical chip and the type of the sample to be handled. However, when the size of the cavity 174 is such that its width is 3 mm, its length is 0.3 mm, and its thickness is 0.3 mm, and wherein the sample discharge hole 178 and the communication hole 176 have diameters of 0.07 mm, then the sample may be supplied in an amount of 100 picoliters per each driving of the actuator section 177, provided the viscosity of the sample is 2 centipoises.

In the microchemical chip 10C, the sample supply section 160 may be used to arbitrarily set the supply timing of the sample to the channel 14, and the supplied amount of sample may be in units of picoliters. The microchemical chip 10C has been successfully provided while reducing costs, and also enabling a more minute amount of sample to be supplied from the outside. Further, high speed analysis, improvement in analytical accuracy, and efficiency of use of the sample can be realized.

Further, in the microchemical chip 10C, the pump section 22 is not always essential. Electroosmotic flow may also be utilized, or a conventional external pump may be used for moving the fluid in the channel 14.

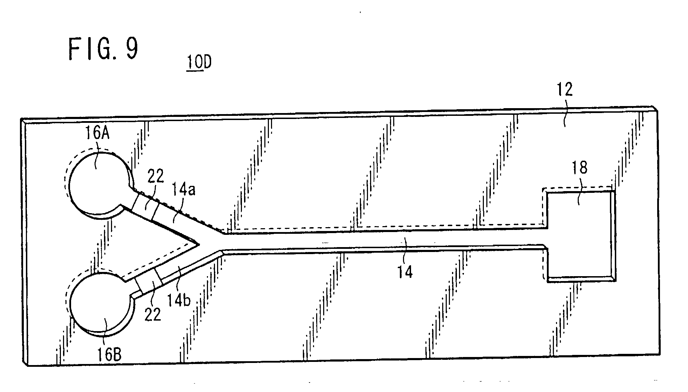

Next, a microchemical chip 10D according to a fourth embodiment will be explained with reference to FIG. 9.

As shown in FIG. 9, the microchemical chip 10D is constructed in approximately the same manner as the microchemical chip 10A described above. However, the microchemical chip 10D differs in that two fluid storage sections (first and second fluid storage sections 16A, 16B) are provided, and respective pump sections 22 are formed in the vicinity of the fluid storage sections 16A, 16B. The first and second pump sections 22A, 22B shown in FIGS. 2 and 3 can be used as the pump sections 22.

That is, as shown in FIG. 9, the microchemical chip 10D comprises a first channel 14a for feeding fluid contained in the first fluid storage section 16A downstream, a second channel 14b for feeding fluid contained in the second fluid storage section 16B downstream, and a merging channel 14 at which two types of fluids, fed through the first and second channels 14a, 14b, are merged together.

For example, when a sample, serving as an inspection objective, is supplied to the first fluid storage section 16A, another sample, also serving as an inspection objective, may be supplied to the second fluid storage section 16B. With this arrangement, it is possible to easily perform, for example, biochemical analysis, as a result of merging (and, for example, causing reaction between) the two types of samples. Of course, a transport fluid may also be supplied to the second fluid storage section 16B. In this case, a sample is moved to the merging point using the pump section 22 installed in the first channel 14a, whereas the transport fluid is continuously supplied using the pump section 22 installed in the second channel 14b. Accordingly, the sample per se, which has been moved to the merging point, can be more efficiently utilized when performing, for example, separation, reaction and analysis.

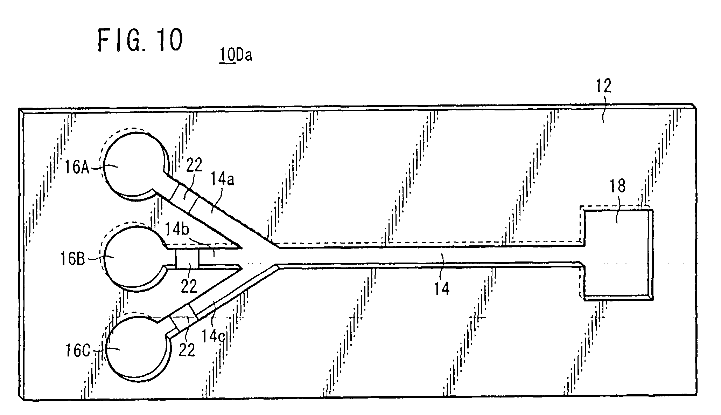

As shown in FIG. 10, a microchemical chip 10Da according to a modified embodiment comprises, for example, three fluid storage sections 16A to 16C provided on the surface of the substrate 12, together with first to third channels 14a to 14c and a merging channel 14. Accordingly, mutually different samples may be supplied to the first and second channels 14a, 14b respectively, and a transport fluid may be supplied to the third channel 14c. Therefore, it is easy to inspect the result after merging of different samples, while conserving valuable or expensive samples. Of course, four or more channels, and one or more merging channels, may also be provided.

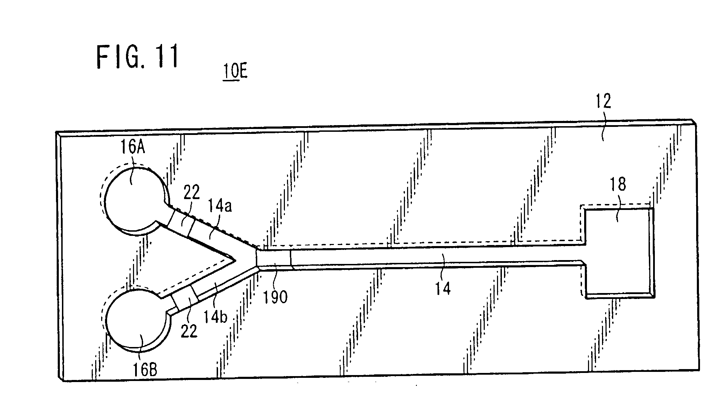

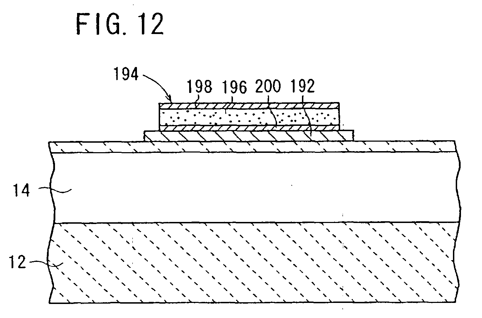

Next, as shown in FIG. 11, a microchemical chip 10E according to a fifth embodiment shall be described. The microchemical chip 10E is constructed in approximately the same manner as the microchemical chip 10D described above. However, the microchemical chip 10E differs in that a vibration-generating section 190 is provided at the merging portion. As shown in FIG. 12, for example, the vibration-generating section 190 comprises a vibration plate 192 provided at a merging portion of the channel 14, and an operating section 194 (made up of a shape-retaining layer 196, an upper electrode 198, and a lower electrode 199) formed on the vibration plate 192. When alternating voltage is applied to the upper electrode 198 and the lower electrode 200, vibration is easily generated at the merging portion. The vibration plate 192 is essential if the operating section 194 is formed by means of integrated sintering. However, the vibration plate 192 is not essential when, for example, the operating section 194 is manufactured using electrodes that are formed on a bulk piezoelectric material. The operating section 194 may also be directly adhered to the channel 14. The vibration-generating section 190 may be installed, for example, on a side surface or a bottom surface, rather than being installed at an upper portion of the channel 14. In particular, when the substrate 12 is composed of zirconia ceramics, the vibration-generating section 190 may also be formed integrally with the pump section 22.

Further, in the microchemical chip 10E, it is possible to enhance mixing and merging efficiency of two different types of samples at the merging portion, by applying vibration to the merging portion, wherein reaction and inspection speed have been successfully improved.

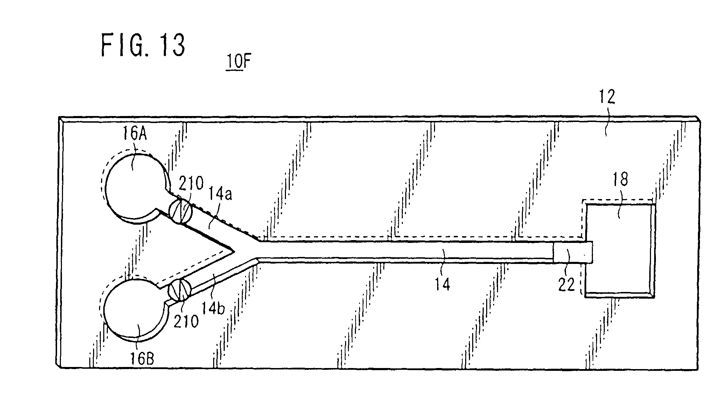

Next, a microchemical chip 10F according to a sixth embodiment will be explained with reference to FIG. 13.

As shown in FIG. 13, the microchemical chip 10F is constructed in approximately the same manner as the microchemical chip 10B described above. However, the microchemical chip 10F differs in that two fluid storage sections (first and second fluid storage sections 16A, 16B) are provided, wherein check valves 210 are formed in the vicinity of the respective fluid storage sections 16A and 16B. Any one of the first to fourth pump sections 22A to 22D, shown in FIGS. 2 and 3 or FIGS. 5 and 6, can be used as the pump section 22.

The microchemical chip 10F also includes a first channel 14a feeding fluid contained in the first fluid storage section 16A downstream, a second channel 14b feeding fluid contained in the second fluid storage section 16B downstream, and a merging channel 14 where two fluids fed through the first and second channels 14a, 14b are merged.

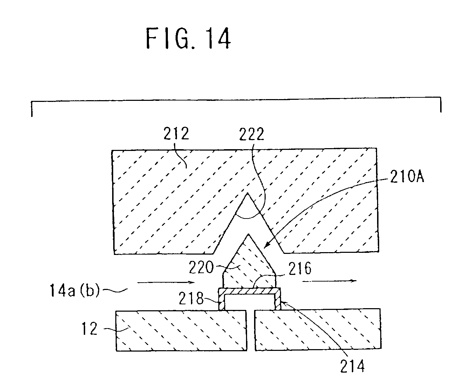

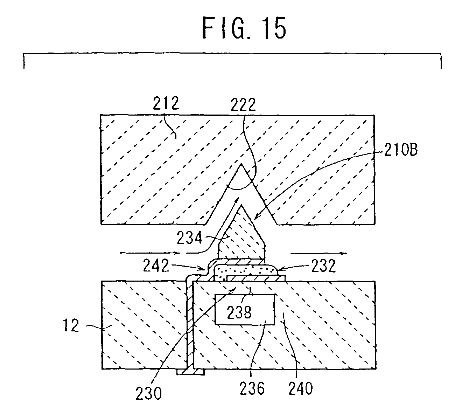

A first check valve 210A shown in FIG. 14 and/or a second check valve 210B shown in FIG. 15 can be used as the check valve 210. Features of the check valve 210 shall now be explained, assuming that the substrate 12 is covered with a lid plate 212, for closing at least channels 14a and 14b.

As shown in FIG. 14, the first check valve 210A comprises a main valve body 214 provided in channels 14a, 14b of the substrate 12.

The main valve body 214 comprises an upper plate 216, side walls 218 provided between the substrate 12 and the upper plate 216, and a conical displacement-transmitting section 220 disposed on the upper plate 216. A conical recess 222 is formed in a portion of the lid plate 212, , corresponding in location to the displacement-transmitting section 220.

Side walls 218 are composed of a piezoelectric/electrostrictive material or an anti-ferroelectric material. Although not shown, electrode films are formed on the side walls 218. When a voltage is supplied to the electrode films to apply an electric field to the side walls 218, the side walls 218 are expanded/contracted vertically depending on the intensity of the electric field.

When the displacement-transmitting section 220 contacts the inner surface of the recess 222 by applying a negative electric field to elongate the side walls 218, the flow of fluid is stopped. By contrlst. when the fluid is stopped. By contrast, when the displacement-transmitting section 220 separates from the recess 222 by applying a positive electric field to contract the side walls 218, flow of fluid through the channel 14a (14b) resumes.

On the other hand, as shown in FIG. 15, the second check valve 210B comprises a main valve body 230 provided in channels 14a, 14b of the substrate 12.

The main valve body 230 comprises an actuator section 232, and a conical displacement-transmitting section 234 disposed on the actuator section 232. The actuator section 232 includes a hollow space 236 formed in the substrate 12, wherein a vibrating section 238 and a fixed section 240 are formed as a result of the hollow space 236. An operating section 242 is formed on the vibrating section 238.

The displacement-transmitting section 234 contacts with or separates from the recess 222 by vertically displacing the actuator section 232 of the main valve body 230. Thus, flow of fluid may be stopped or advanced.

As shown in FIG. 13, a sample, serving as an inspection objective, and a transport fluid may be supplied to the first fluid storage section 16A. Another sample, serving as a different inspection objective, and another transport fluid may be supplied to the second fluid storage section 16B. Using this procedure, for example, biochemical analysis can be easily performed as a result of merging (e.g., causing reaction between) two types of samples. The respective check valves 210 can be used to arbitrarily adjust the amounts at which the samples are supplied to the respective channels 14a, 14b. Accordingly, analytical accuracy can be improved while reducing cost.

Alternatively, for example, a sample serving as an inspection objective may be supplied to the first fluid storage section 16A, and a transport fluid may be supplied to the second fluid storage section 16B. Also in this case, the check valves 210 can be used to arbitrarily adjust the amounts of the sample and the transport fluid that are supplied to the respective channels 14a, 14b.

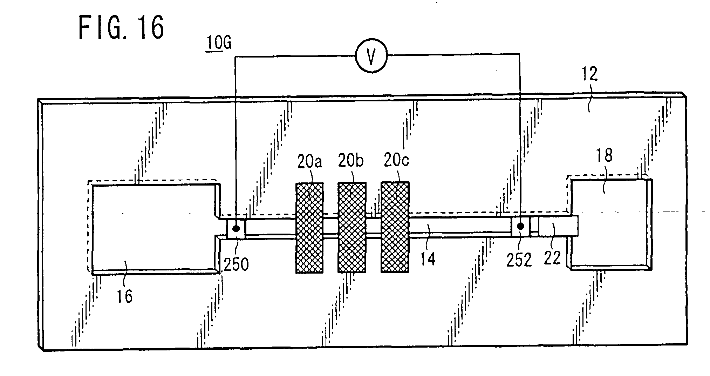

Next, a microchemical chip 10G according to a seventh embodiment will be explained with reference to FIG. 16.

As shown in FIG. 16, the microchemical chip 10G is constructed in approximately the same manner as the microchemical chip 10B described above. However, the microchemical chip 10G differs in that electrodes 250, 252 are formed on upstream and downstream sides of the channel 14.

Specifically, one electrode 250 is formed in the vicinity of the fluid storage section 16, and the other electrode 252 is formed upstream of the pump section 22 of the channel 14. When a sample, serving as the inspection objective, comprises a solute having an electric charge, wherein the sample has a negative charge, for example, then one electrode 250 operates as an anode (i.e., an electrode having a higher electric potential) and the other electrode 252 operates as the cathode. Accordingly, the sample is moved by electrophoresis in a direction opposite to the direction of movement caused by the pump section 22.

As described above, in the microchemical chip 10G, when the direction of electrophoresis is opposite to the direction of movement caused by the pump section 22, a force acts to attract the sample per se in a direction opposite to the direction of flow (i.e., toward the positive electrode). Thus, the separation ability during electrophoresis analysis can be improved.

When the fluid itself has a given polarity, movement is caused by electroosmotic flow, in addition to movement of the fluid caused by the pump, by adjusting the intensity of the electric field applied between the electrodes. Thus, high speed movement of fluid and rapid completion of analysis can be realized more effectively.

When a sample (solute) serving as the inspection objective is positively charged, a force acts to attract the sample per se in a direction opposite to the direction of flow (i.e., toward the negative electrode), by making the electrode that influences the movement direction of the pump section 22 to be positive. Thus, sufficient ability of separation can be secured.

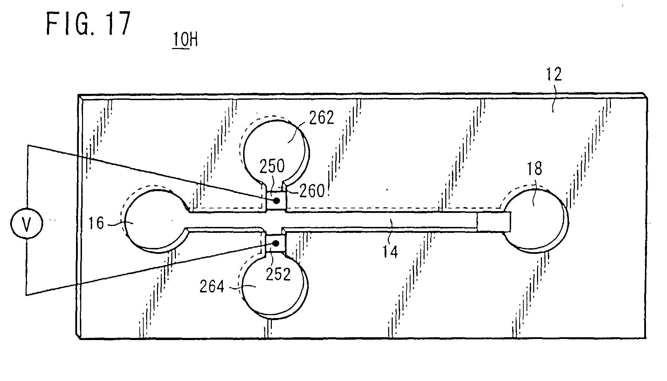

Next, a microchemical chip 10H according to an eighth embodiment will be explained with reference to FIG. 17.

As shown in FIG. 17, the microchemical chip 10H is constructed in approximately the same manner the microchemical chip 10B described above. However, the microchemical chip 10H differs in that another channel 260 is formed, which intersects with the channel 14, and electrodes 250, 252 are provided on upstream and downstream sides of the additional channel 260.

Specifically, one electrode 250 is formed in the vicinity of a fluid storage section 262, and the other electrode 252 is formed in the vicinity of a fluid discharge section 264 disposed in the other channel 260. When a sample serving as the inspection objective comprises a fluid having a given electric charge, for example, when the sample has a negative charge, then one electrode 250 is used as a cathode (i.e., an electrode having a lower electric potential), and the other electrode 252 is used as an anode. Accordingly, electroosmotic flow is generated in a direction toward the fluid discharge section 264.

When a sample irrespective its of electric charge is supplied to one channel 14, and a sample having an electric charge is supplied to the other channel 260, then the samples are mixed with each other at the intersecting portion. Further, the mixed fluid flows toward a downstream side of the channel 14, while using one channel 14. Accordingly, biochemical analysis can be performed on the mixed fluid.

Of course, when a vibration-generating section 190 (see FIG. 11) is formed at the intersecting portion, efficiency of the reaction and mixing of the two types of samples at the intersecting portion can be enhanced. Thus, it is possible to improve inspection speed and enhance the experiment.

In the microchemical chip 10H, when the sample is separated and moved by the pump section 22, using the transport fluid supplied to the intersecting portion from the fluid storage section 16 via the channel 14, and after the sample is supplied to the intersecting portion from the fluid storage section 262 using electroosmotic flow as described above, sample fluid, apart from the sample actually supplied to the crossing portion, can be prevented actually supplied to the crossing portion, can be prevented from flowing out of the channel 14 by reversing the voltage applied to the electrodes during a period in which the pump section 22 is operated.

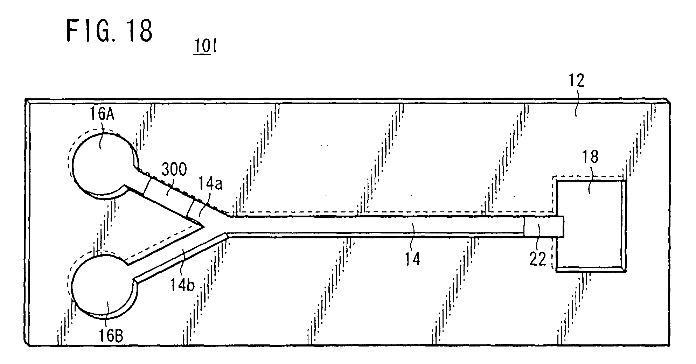

Next, a microchemical chip 10I according to a ninth embodiment will be explained with reference to FIG. 18.

As shown in FIG. 18, the microchemical chip 10I is constructed in approximately the same manner as the microchemical chip 10F described above. However, the microchemical chip 10I differs in that a valve section 300 is formed in a first channel 14a through which a sample serving as the inspection objective flows. In other words, the valve section 300 is not formed in the second channel 14b, through which the transport fluid flows. Rather, the valve section 300 is formed only in the first channel 14a to which a valuable or expensive sample is supplied.

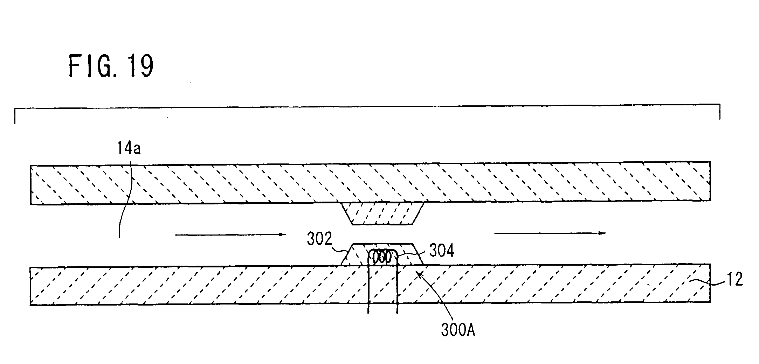

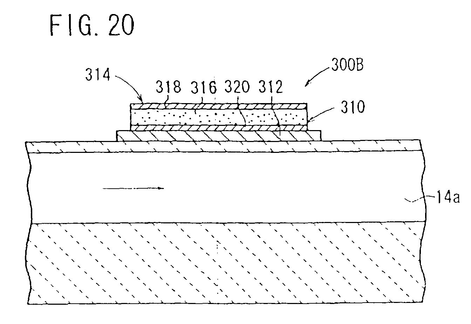

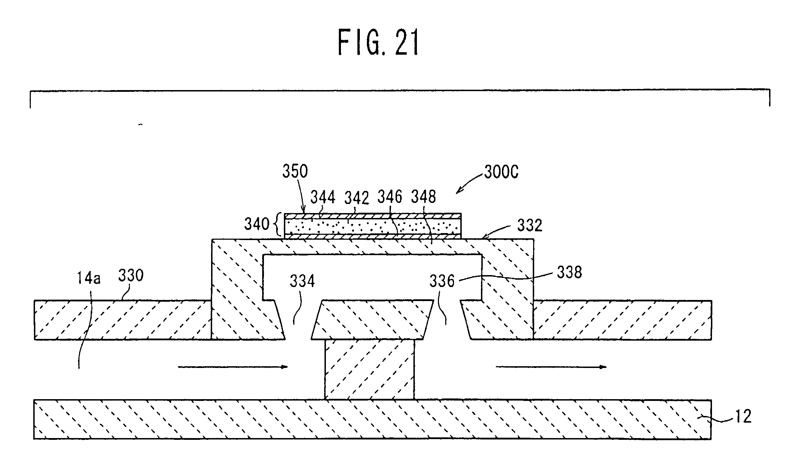

The valve section 300 may comprise, for example, the first valve section 300A shown in FIG. 19, the second valve section 300B shown in FIG. 20, or the third valve section 300C shown in FIG. 21.

As shown in FIG. 19, the first valve section 300A comprises a flow passage resistor 302 made of, for example, ceramic, and a heater 304 embedded in the flow passage resistor 302.

The first valve section 300A utilizes change in flow passage resistance resulting from a viscosity changer of the fluid caused by heat. When electric power is applied to the heater 304 to heat a portion of the first channel 14a corresponding to the flow passage resistor 302, the viscosity of the fluid is lowered by such heat, and hence fluid flows through the first channel 14a. On the other hand, when application of electric power to the heater 304 is halted, to thereby cool the portion corresponding to the flow passage resistor 302, the viscosity of the fluid is raised. As a result, flow passage resistance is increased and flow of the fluid is stopped. In other words, the valve section 300 functions whereby fluid flow can be controlled by applying and halting application of electric power to the heater 304.

As shown in FIG. 20, the second valve section 300B has a vibration-generating section 310, which applies vibration to a part of the first channel 14a. The vibration-generating section 310 comprises a vibration plate 312 provided on the first channel 14a, and an operating section 314 (made up of a shape-retaining layer 316, an upper electrode 318, and a lower electrode 320) formed on the vibration plate 312. When alternating voltage is applied to the upper electrode 318 and the lower electrode 320, vibration is easily generated in the first channel 14a.

The second valve section 300B utilizes change in flow passage resistance caused by vibration. When vibration is applied to a part of the first channel 14a, flow of fluid is stopped because the flow passage resistance increases.

As shown in FIG. 21, the third valve section 300C comprises a casing 332 provided on a lid plate 330 covering the first channel 14a, so that at least the first channel 14a is closed. A cavity 338, communicating with the first channel 14a via an inlet hole 334 and a discharge hole 336, is formed in the casing 332.

An operating section 340 (made up of a shape-retaining layer 342, an upper electrode 344, and a lower electrode 346) is formed on the casing 332. The operating section 340 functions as an actuator section 350, in conjunction with an upper portion (vibration plate 348) of the casing 332.

Conversely to the pump section shown in FIG. 6, the inlet hole 334 has a diameter that increases progressively toward the cavity 338. The opening diameter on the side of the first channel 14a is smaller than the opening diameter on the side of the cavity 338. Similarly, the discharge hole 336 has a diameter that decreases progressively toward the cavity 338. The opening diameter on the side of the first channel 14a is larger than the opening diameter on the side of the cavity 338. In other words, the inlet hole 334 is structured so that pressure is easily applied via the inlet hole 334 to fluid disposed upstream thereof by the fluid contained in the cavity 338. The discharge hole 336 is structured so that pressure is easily applied via the discharge hole 336 to fluid contained in the cavity 338 by the fluid disposed downstream of the discharge hole 336.

When the volume of the cavity 338 decreases by driving the actuator section 350, and the sample is moved through the first channel 14a by activating the pump section 22 shown in FIG. 18, a force is exerted on the fluid in the cavity 338 to cause the fluid to flow in an opposite direction (i.e., a direction opposite to the flow of fluid caused by the pump section 22). As a result, flow of fluid may be halted at the third valve section 300C.

The embodiments described above are illustrative of cases in which two or three channels are merged, or in which two channels intersect with each other. However, the present invention is also applicable to cases in which four or more channels are merged, or in which three or more channels intersect with each other.

It shall be understood that the microchemical chip according to the present invention is not limited to the embodiments described above, and that the invention may be embodied in other various forms without departing from the gist or essential characteristics of the present invention. For example, the substrate 12 may be formed of zirconia ceramics, having low reactivity with actuator materials, in the event that the pump section 22 and the sample supply section 160 are formed integrally. Alternatively, the substrate 12 may be composed of a zirconia ceramic complex, in which only the plate member, for closing the channel 14 at an upper surface thereof, is composed of glass.

### Industrial Applicability:

As explained above, utilizing the microchemical chip according to the present invention, it is possible to miniaturize size of the chip, improve analytical accuracy of the sample, and to analyze samples having no electrical charge. Further, use of multiple channels can be facilitated.

Additionally, it is possible to improve analytical accuracy and to realize high analysis speed, in combination with electrophoresis.

## Claims

1. A microchemical chip comprising one or more channels (14) for allowing a fluid to flow therethrough on a substrate (12), wherein:
a pump section (22) is provided on an upstream side and/or a downstream side of said channel (14); and
said pump section (22) is formed integrally on said substrate (12).

2. The microchemical chip according to claim 1, further comprising a valve section (300) disposed on at least said upstream side of said channel (14), wherein:
said valve section (300) is formed integrally on said substrate (12).

3. The microchemical chip according to claim 1 or 2, further comprising electrodes (250, 252) for performing electrophoresis on said fluid, disposed on said upstream side and/or said downstream side of said channel (14).

4. The microchemical chip according to claim 1, wherein said channel (14) includes one or more sample channels (166) for allowing one or more samples as inspection objectives to flow therethrough.

5. The microchemical chip according to claim 4, wherein said one or more samples and a transport fluid, which correspond to said one or more sample channels (166), flow through said one or more sample channels (166) respectively.

6. The microchemical chip according to claim 4 or 5, wherein a sample supply section (160) is provided for said one or more sample channels (166), for supplying said one or more samples corresponding thereto respectively.

7. The microchemical chip according to claim 6, wherein said channel (14) includes a merging channel (14), in which said one or more samples are merged with each other from said one or more sample channels (166).

8. The microchemical chip according to claim 1, wherein said channel (14) includes one or more sample channels (14a, 14b) for allowing one or more samples as inspection objectives to flow therethrough respectively, and one transport channel (14c) for allowing a transport fluid for transporting said one or more samples to flow therethrough.

9. The microchemical chip according to claim 8, wherein said channel (14) includes a merging channel (14) in which said one or more samples from said one or more sample channels (14a, 14b) are merged with said transport fluid from said one transport channel (14c), or a merging channel (14) in which a fluid obtained by mixing said one or more samples from said one or more sample channels (14a, 14b) is merged with said transport fluid from said one transport channel (14c).

10. The microchemical chip according to claim 7 or 9, wherein each of said one or more sample channels (14a, 14b) has a valve section (300) disposed upstream of said merging channel (14).

11. The microchemical chip according to claim 7, 9, or 10, further comprising a vibration-generating section (190) disposed at a portion at which merging occurs.

12. The microchemical chip according to claim 6, wherein said one or more sample channels (14a, 14b) intersect with each other.

13. The microchemical chip according to claim 8, wherein said one or more sample channels (14a, 14b) and said one transport channel (14c) intersect with each other, or a merging channel of said one or more sample channels (14a, 14b) and said one transport channel (14c) intersect with each other.

14. The microchemical chip according to claim 12 or 13, wherein each of said one or more sample channels (14a, 14b) has a valve section (300) disposed upstream of a location at which intersecting occurs.

15. The microchemical chip according to any one of claims 12 to 14, wherein a vibration-generating section (190) is provided at said location at which intersecting occurs.

16. The microchemical chip according to claim 2, 10, or 14, wherein said valve section (300) has a heater (304) for applying heat to a part of said channel (14).

17. The microchemical chip according to claim 2, 10, or 14, wherein said valve section (300) has a vibration-generating section (310) for applying vibration to a part of said channel (14).

18. The microchemical chip according to claim 2, 10, 14 or 17, wherein said valve section (300) includes a cavity (338) that makes communication with said channel (14), and an actuator section (350) that varies a volume of said cavity (338).

19. The microchemical chip according to claim 1, wherein said pump section (22) includes a cavity (86) that makes communication with said channel (14), and a pump actuator section (84) that varies a volume of said cavity (86).

20. The microchemical chip according to claim 6, wherein said sample supply section (160) comprises:
a nozzle (178);
a cavity (174) that makes communication with said channel (14); and
a pump actuator section (177) that varies a volume of said cavity (174).

21. The microchemical chip according to claim 19 or 20, wherein a valve section (92) is provided between said channel (14) and said cavity (86).

22. The microchemical chip according to claim 21, wherein said valve section (92) includes a valve plug (98) arranged at a communicating section (88) between said channel (14) and said cavity (86), and a valve actuator section (96) for operating said valve plug (98) to selectively open and close said communicating section (88).
